# EUROPEAN PATENT SPECIFICATION

(11) **EP 3 893 541 B1**
(45) Date of publication and mention of the grant of the patent: **03.12.2025**
(21) Application number: 19892129.8
(22) Date of filing: 24.10.2019
(51) Int. Cl.: H04W 24/02, H04W 24/04, H04W 24/10

(54) **METHOD AND APPARATUS FOR REPORTING LOCAL GTPU NODE INFORMATION, AND STORAGE MEDIUM**
VERFAHREN, VORRICHTUNG UND SPEICHERMEDIUM ZUR MELDUNG LOKALER GTPU-KNOTENINFORMATIONEN
PROCÉDÉ ET APPAREIL DE RAPPORT D'INFORMATIONS DE NOEUD GTPU LOCAL, ET SUPPORT DE STOCKAGE

(30) Priority: 04.12.2018 CN 201811472769
(43) Date of publication of application: 13.10.2021
(73) Proprietor: ZTE Corporation, Shenzhen, Guangdong 518057 (CN)
(72) Inventor: HOU, Lichang, Shenzhen, Guangdong 518057 (CN); WANG, Jun, Shenzhen, Guangdong 518057 (CN)
(74) Representative: Canzler & Bergmeier Patentanwälte Partnerschaft mbB
(86) International application number: PCT/CN2019/113084
(87) International publication number: WO 2020/114139

(56) References cited:
- CN-A- 1 725 717
- CN-A- 104 378 249
- CN-A- 107 302 803
- HUAWEI: "Improve the restoration for Intermediate UPF restart with PFCP Session Report procedure", vol. CT WG4, no. Vilnius, Lithuania; 20181015 - 20181019, 5 October 2018 (2018-10-05), XP051574163, Retrieved from the Internet <URL:http://www.3gpp.org/ftp/tsg%5Fct/WG4%5Fprotocollars%5Fex%2DCN4/TSGCT4%5F86bis%5FVilnus/Docs/C4%2D187132%2Ezip> [retrieved on 20181005]
- ERICSSON ET AL: "S1-U Path Failure Enhancement", vol. CT WG4, no. West Palm Beach, US; 20180820 - 20180824, 31 August 2018 (2018-08-31), XP051570314, Retrieved from the Internet <URL:http://www.3gpp.org/ftp/tsg%5Fct/TSG%5FCT/TSGC%5F81%5FGold%5FCoast/Docs/CP%2D182078%2Ezip> [retrieved on 20180831]
- "3rd Generation Partnership Project; Technical Specification Group Core Network and Terminals; 5G System; Restoration Procedures (Release 15)", 31 August 2018 (2018-08-31), XP051575121, Retrieved from the Internet <URL:http://www.3gpp.org/ftp/tsg%5Fct/WG4%5Fprotocollars%5Fex%2DCN4/TSGCT4%5F86%5FPalm%5FBeach/Docs/C4%2D186509%2Ezip> [retrieved on 20180831]
- HUAWEI: "User Plane Reporting", 3GPP DRAFT; C4-175181, 27 October 2017 (2017-10-27), Kochi, India, pages 1 - 3, XP051350948

## Description

### TECHNICAL FIELD

The present disclosure relates to the field of communication technology, and in particular, to a method and an apparatus for reporting local GTPU (General Packet Radio Service Tunnelling Protocol User Plane) peer information, and a storage medium.

### BACKGROUND

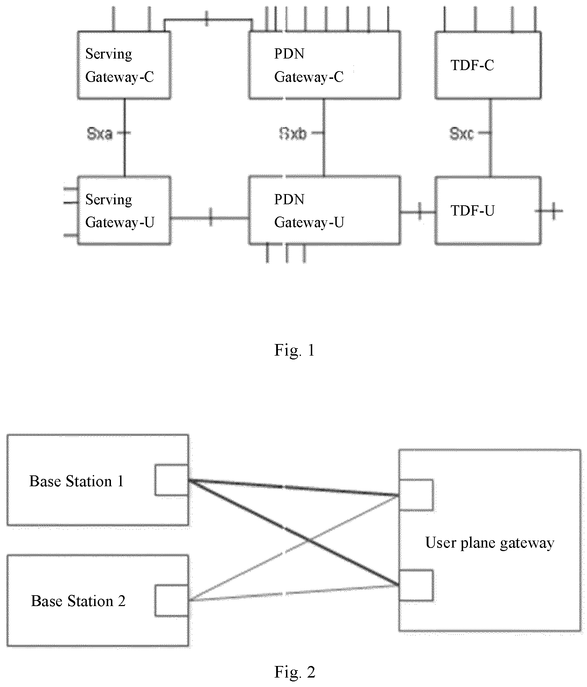

A concept of Control and User plane (CU) separation is introduced into current Evolved Packet Core (EPC) by the 3^{rd} Generation Partnership Project (3GPP) TS 29.244 version. According to the concept, an original network element of a combined control plane and user plane is separated into two network elements of separated control and user planes, and Fig. 1 shows an overall architecture of the two network elements. The key network elements which are separated are as follows:
a Serving Gateway (SGW) is separated into a Serving Gateway Control plane function (SGW-C) and a Serving Gateway User plane function (SGW-U). The SGW-C preserves the contents of control plane (user access control, user context storage, etc.) of the original SGW, and the SGW-U preserves the contents of user plane (packet routing and forwarding, etc.) of the original SGW. An Sxa interface is added between the SGW-C and the SGW-U for bearing control and message forwarding between the control plane and the user plane;
a Packet Data Network (PDN) Gateway (PGW) is separated into a PDN Gateway Control plane function (PGW-C) and a PDN Gateway User plane function (PGW-U). The PGW-C preserves the contents of control plane (user address allocation, charging, etc.) of the original PGW, and the PGW-U preserves the contents of user plane (packet routing and forwarding, etc.) of the original PGW. An Sxb interface is added between the PGW-C and the PGW-U for bearing control and message forwarding between the control plane and the user plane;
a Traffic Detection Function (TDF) is separated into a TDF Control plane function (TDF-C) and a TDF User plane function (TDF-U). The TDF-C preserves the contents of control plane (packet content detection, etc.) of the original TDF, and the TDF-U preserves the contents of user plane (packet routing and forwarding, etc.) of the original TDF. An Sxc interface is added between the TDF-C and the TDF-U for bearing control and message forwarding between the control plane and the user plane; and
the Sxa/Sxb/Sxc interface is carried in the Packet Forwarding Control Protocol (PFCP).

The SGW-C and the PGW-C are collectively called a control plane gateway, and the SGW-U and the PGW-U are collectively called a user plane gateway. One user plane gateway may have a plurality of local GTPU peers that may be connected with a same neighboring GTPU peer. As shown in Fig. 2, a user plane gateway has two local GTPU peers, and a Base Station 1 and a Base Station 2 are neighboring GTPU peers. Since physical paths from the local GTPU peers to a same neighboring GTPU peer may be different, the results of whether the local GTPU peers can communicate with a neighboring GTPU peer may vary.

However, in the current protocol, the information of a local GTPU peer is not carried when the user plane reports a message of failed communication with a neighboring GTPU peer to the control plane, such that the control plane has to deactivate all the users of the user plane which are associated with the neighboring GTPU peer, which affects the users which are associated with the local GTPU peer and can communicate with the neighboring GTPU peer, thereby greatly reducing user experience.

### SUMMARY

The embodiments of the present disclosure provide a method and an apparatus for reporting local GTPU peer information, and a computer-readable storage medium, so as to solve the problem of a poor user experience in the prior art caused by cancelling all the users associated with a neighboring GTPU peer by a control plane because only the information of the neighboring GTPU peer is reported when a message of failed communication with the neighboring GTPU peer is reported.

In a first aspect, an embodiment of the present disclosure provides a method for reporting local GTPU peer information, including: detecting, by each local GTPU peer of a user plane gateway, whether the local GTPU peer can communicate with each neighboring GTPU peer to obtain a detection result, with the detection result including the information of a local GTPU peer which detects failed communication with the neighboring GTPU peer; and sending the detection result to a control plane gateway to allow the control plane gateway to find a corresponding user according to the information of the local GTPU peer in the detection result and restrict use of a disconnected GTPU link corresponding to the local GTPU peer by the user.

In a second aspect, an embodiment of the present disclosure provides a method for reporting local GTPU peer information, including: receiving a detection result of whether each local GTPU peer of a user plane gateway can communicate with each neighboring GTPU peer, which is generated by each local GTPU peer of the user plane gateway and sent by the user plane gateway, with the detection result including the information of a local GTPU peer which detects failed communication with the neighboring GTPU peer; and searching for a corresponding user according to the information of the local GTPU peer which detects failed communication with the neighboring GTPU peer in the detection result, so as to restrict use of a disconnected GTPU link corresponding to the local GTPU peer by the user.

In a third aspect, an embodiment of the present disclosure provides an apparatus for reporting local GTPU peer information, including: a detecting module configured to detect, by each local GTPU peer of a user plane gateway, whether the local GTPU peer can communicate with each neighboring GTPU peer to obtain a detection result, with the detection result including the information of a local GTPU peer which detects failed communication with the neighboring GTPU peer; and a sending module configured to send the detection result to a control plane gateway to allow the control plane gateway to find a corresponding user according to the information of the local GTPU peer in the detection result and restrict use of a disconnected GTPU link corresponding to the local GTPU peer by the user.

In a fourth aspect, an embodiment of the present disclosure provides an apparatus for reporting local GTPU peer information, including: a receiving module configured to receive a detection result of whether each local GTPU peer of a user plane gateway can communicate with each neighboring GTPU peer, which is generated by each local GTPU peer of the user plane gateway and sent by the user plane gateway, with the detection result including the information of a local GTPU peer which detects failed communication with the neighboring GTPU peer; and a search module configured to search for a corresponding user according to the information of the local GTPU peer which detects failed communication with the neighboring GTPU peer in the detection result, so as to restrict use of a disconnected GTPU link corresponding to the local GTPU peer by the user.

In a fifth aspect, an embodiment of the present disclosure provides a storage medium having a computer program stored therein. When executed by a processor, the computer program performs the following steps: step 1, detecting, by each local GTPU peer of a user plane gateway, whether the local GTPU peer can communicate with each neighboring GTPU peer to obtain a detection result, with the detection result including the information of a local GTPU peer which detects failed communication with the neighboring GTPU peer; and step 2, sending the detection result to a control plane gateway to allow the control plane gateway to find a corresponding user according to the information of the local GTPU peer in the detection result and restrict use of a disconnected GTPU link corresponding to the local GTPU peer by the user.

In a sixth aspect, an embodiment of the present disclosure provides a storage medium having a computer program stored therein. When executed by a processor, the computer program performs the following step: step 1, receiving a detection result of whether each local GTPU peer of a user plane gateway can communicate with each neighboring GTPU peer, which is generated by each local GTPU peer of the user plane gateway and sent by the user plane gateway, with the detection result including the information of a local GTPU peer which detects failed communication with the neighboring GTPU peer; and step 2, searching for a corresponding user according to the information of the local GTPU peer which detects failed communication with the neighboring GTPU peer in the detection result, so as to restrict use of a disconnected GTPU link corresponding to the local GTPU peer by the user.

### BRIEF DESCRIPTION OF THE DRAWINGS

The additional advantages and beneficial effects will become apparent to those of ordinary skill in the art upon reading the following detailed description of the embodiments. The drawings are merely intended to illustrate the embodiments and should not be considered to limit the present disclosure. The same reference numerals are used to indicate the same components throughout the drawings. In the drawings:
Fig. 1 is a schematic diagram of the existing architecture of network elements of separated control and user planes;
Fig. 2 is a schematic diagram illustrating communication relations between local GTPU peers and neighboring GTPU peers;
Fig. 3 is a flowchart illustrating a method for reporting local GTPU peer information according to the present disclosure;
Fig. 4 is a flowchart illustrating a method for reporting local GTPU peer information according to of the present disclosure;
Figs. 5 to 7 are flowcharts illustrating a method for reporting local GTPU peer information according to the present disclosure;
Fig. 8 is a flowchart illustrating a method for reporting local GTPU peer information according to the present disclosure;
Fig. 9 is a flowchart illustrating a method for reporting local GTPU peer information according to the present disclosure;
Figs. 10 and 11 are flowcharts illustrating a method for reporting local GTPU peer information according to the present disclosure;
Fig. 12 is a structural block diagram of an apparatus for reporting local GTPU peer information according to the present disclosure;
Fig. 13 is a structural block diagram of an apparatus for reporting local GTPU peer information according to the present disclosure;
Fig. 14 is a structural block diagram of an apparatus for reporting local GTPU peer information according to the present disclosure; and
Fig. 15 is a structural block diagram of an apparatus for reporting local GTPU peer information according to the present disclosure.

### DETAILED DESCRIPTION

The exemplary embodiments of the present disclosure will be described in detail below with reference to the drawings. Although the drawings illustrate the exemplary embodiments of the present disclosure, it should be understood that the present disclosure may be implemented in various ways and should not be limited by the embodiments illustrated herein. On the contrary, the embodiments provided herein are used to fully convey the scope of the present disclosure to those of ordinary skill in the art so that they can understand the present disclosure thoroughly.

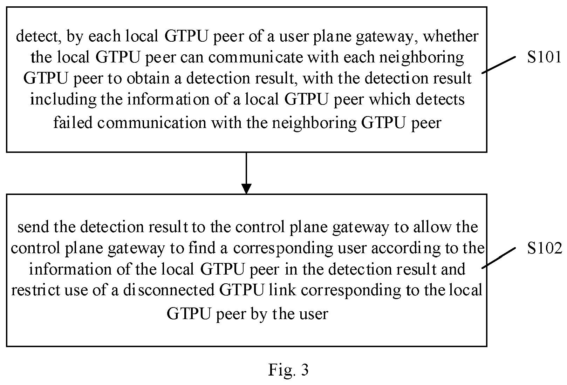

The present disclosure provides a method for reporting local GTPU peer information. An executing agency may be an SGW-U or a PGW-U. As shown in Fig. 3, the method includes steps S101 to S102.

At step S101, detecting, by each local GTPU peer of a user plane gateway, whether the local GTPU peer can communicate with each neighboring GTPU peer to obtain a detection result, with the detection result including the information of a local GTPU peer which detects failed communication with the neighboring GTPU peer.

In this step, detecting, by each local GTPU peer of the user plane gateway, whether the local GTPU peer can communicate with each neighboring GTPU peer to obtain the detection result includes: setting up a test association between a local GTPU peer and a neighboring GTPU peer, and establishing a session relation between the user plane gateway and a control plane gateway to allow the user plane gateway to send the detection result to the control plane gateway according to the session relation; and regularly sending a link detection message by the local GTPU peer to the neighboring GTPU peer with which the test association is set up to detect whether the local GTPU peer can communicate with the neighboring GTPU peer with which the test association is set up, so as to obtain the detection result.

At step S102, sending the detection result to the control plane gateway to allow the control plane gateway to find a corresponding user according to the information of the local GTPU peer in the detection result and restrict use of a disconnected GTPU link corresponding to the local GTPU peer by the user.

In the present disclosure, when the user plane reports a neighboring GTPU peer with a disconnected path to the control plane, the information of the local GTPU peer associated with such neighboring GTPU peer is also sent to the control plane; and according to the information reported by the user plane (the neighboring GTPU peer and the local GTPU peer of the user plane gateway), the control plane can accurately deactivate an associated user without affecting users of other local GTPU peer of the user plane associated with the neighboring GTPU peer, thereby improving user experience.

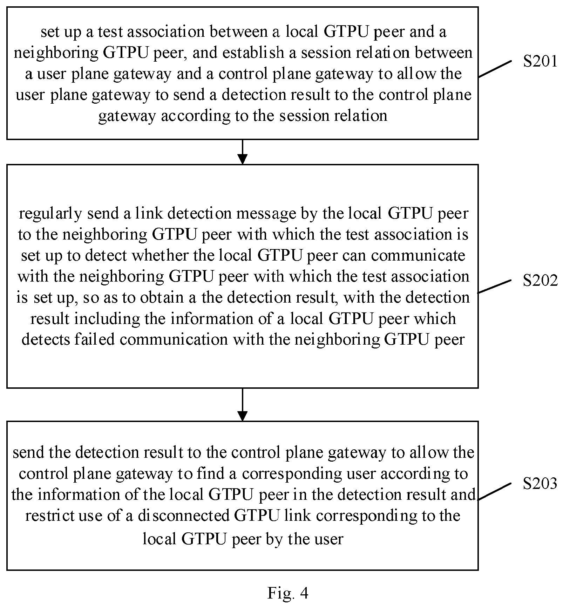

The present disclosure provides a method for reporting local GTPU peer information. As shown in Fig. 4, the method includes steps S201 to S203.

At step S201, setting up a test association between a local GTPU peer and a neighboring GTPU peer, and establishing a session relation between a user plane gateway and a control plane gateway to allow the user plane gateway to send a detection result to the control plane gateway according to the session relation.

At step S202, regularly sending a link detection message by the local GTPU peer to the neighboring GTPU peer with which the test association is set up to detect whether the local GTPU peer can communicate with the neighboring GTPU peer with which the test association is set up, so as to obtain the detection result, with the detection result including the information of a local GTPU peer which detects failed communication with the neighboring GTPU peer.

At step S203, sending the detection result to the control plane gateway to allow the control plane gateway to find a corresponding user according to the information of the local GTPU peer in the detection result and restrict use of a disconnected GTPU link corresponding to the local GTPU peer by the user.

In the present disclosure, by setting up the test associations between the local GTPU peers and the neighboring GTPU peers, the communication status of each neighboring GTPU peer can be detected and determined to obtain the detection result.

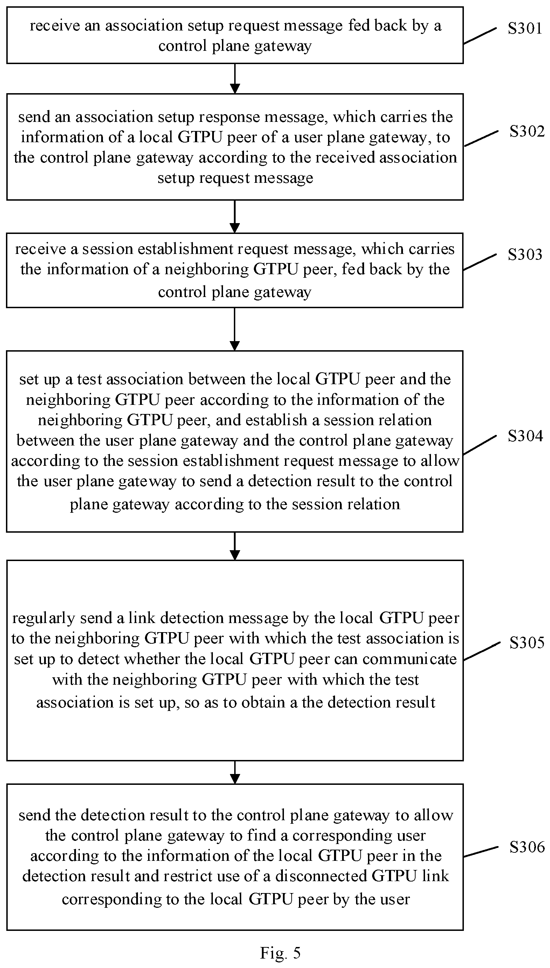

The present disclosure provides a method for reporting local GTPU peer information. As shown in Fig. 5, the method includes steps S301 to S306.

At step S301, receiving an association setup request message fed back by a control plane gateway.

At step S302, sending an association setup response message, which carries the information of a local GTPU peer of a user plane gateway, to the control plane gateway according to the received association setup request message.

At step S303, receiving a session establishment request message, which carries the information of a neighboring GTPU peer, fed back by the control plane gateway.

At step S304, setting up a test association between the local GTPU peer and the neighboring GTPU peer according to the information of the neighboring GTPU peer, and establishing a session relation between the user plane gateway and the control plane gateway according to the session establishment request message to allow the user plane gateway to send a detection result to the control plane gateway according to the session relation.

At step S305, regularly sending a link detection message by the local GTPU peer to the neighboring GTPU peer with which the test association is set up to detect whether the local GTPU peer can communicate with the neighboring GTPU peer with which the test association is set up, so as to obtain the detection result.

At step S306, sending the detection result to the control plane gateway to allow the control plane gateway to find a corresponding user according to the information of the local GTPU peer in the detection result and restrict use of a disconnected GTPU link corresponding to the local GTPU peer by the user.

In the present disclosure, when reported to the control plane gateway, the detection result may be sent through the Sx interface between the control plane gateway and the user plane gateway according to the PFCP. The detection result may be sent through an Sx Node Report request in the following two manners shown in Table 1 and Table 2, but not limited to the following two manners.

**Table 1**

| Information elements | P | Condition/Comment | Appl. | | | IE Type |
|---|---|---|---|---|---|---|
| | | | Sxa | Sxb | Sxc | |
| Local GTP-U Peer | C | This IE shall include the IP address of the Local GTP-U peer towards which a user plane path failure has been detected. | X | X | - | Local GTP-U Peer |
| Remote GTP-U Peer | M | This IE shall include the IP address of the remote GTP-U peer towards which a user plane path failure has been detected. | X | X | - | Remote GTP-U Peer |

The above report table adds the information of a local GTPU peer to a user plane path failure report message. The IP address of the local GTPU peer (the underlined part) is added to a User Plane Path Failure Report IE of an Sx Node Report request message. The Sx Node Report message in this manner can carry a plurality of User Plane Path Failure Reports each carrying one local GTPU peer and a plurality of associated neighboring GTPU peers.

**Table 2**

| Information elements | P | Condition/Comment | Appl. | | | IE Type |
|---|---|---|---|---|---|---|
| | | | Sxa | Sxb | Sxc | |
| Node ID | M | This IE shall contain the unique identifier of the sending Node. | X | X | X | Node ID |
| Node Report Type | M | This IE shall indicate the type of the report. | X | X | X | Node Report Type |
| Local GTP-U Peer | C | This IE shall include the IP address of the Local GTP-U peer towards which a user plane path failure has been detected. | X | X | - | Local GTP-U Peer |
| User Plane Path Failure Report | C | This IE shall be present if the Node Report Type indicates a User Plane Path Failure Report. | X | X | - | User Plane Path Failure Report |

The above report table adds the information of a local GTPU peer to an Sx Node Report request message. One Sx Node Report request message only carries a plurality of neighboring GTPU peers associated with one local GTPU peer.

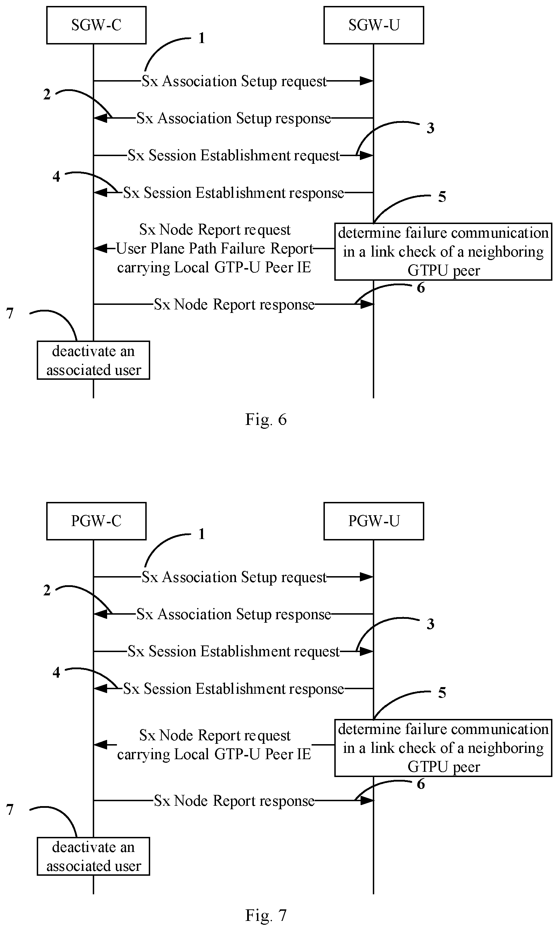

The executing agency may be an SGW-U (Serving Gateway User plane function) shown in Fig. 6, or a PGW-U (PDN Gateway User plane function) shown in Fig. 7. The method includes steps 1 to 7.
1) At step 1, a control plane sends an Sx Association Setup request message to a user plane.
2) At step 2, the user plane returns an Sx Association Setup response message, with the information of a local GTPU peer carried to the control plane through a User Plane IP Resource information IE.
3) At step 3, the control plane sends a user activation request message (Sx Session Establishment request) to the user plane, carrying the information of a neighboring GTPU peer.
4) At step 4, the user plane returns a user activation response message (Sx Session Establishment response), carrying the information of the local GTPU peer.
5) At step 5, the user plane regularly sends an ECHO (link detection) message to the neighboring GTPU peer through the local GTPU peer, and sends an Sx Node Report request message to the control plane when it is determined that the local GTPU peer fails to communicate with the neighboring GTPU peer, with the message carrying the information of the local GTPU peer and the information of the neighboring GTPU peer.
6) At step 6, the control plane returns an Sx Node Report response message to the user plane.
7) At step 7, the control plane deactivates an associated user according to the information of the local GTPU peer of the user plane and the information of the neighboring GTPU peer.

In the present disclosure, the user plane can report the local GTPU peer associated with the neighboring GTPU peer with a disconnected path to the control plane; and according to the information reported by the user plane (the neighboring GTPU peer and the local GTPU peer of the user plane), the control plane can accurately deactivate an associated user without affecting users of other local GTPU peer of the user plane associated with the neighboring GTPU peer, thereby improving user experience.

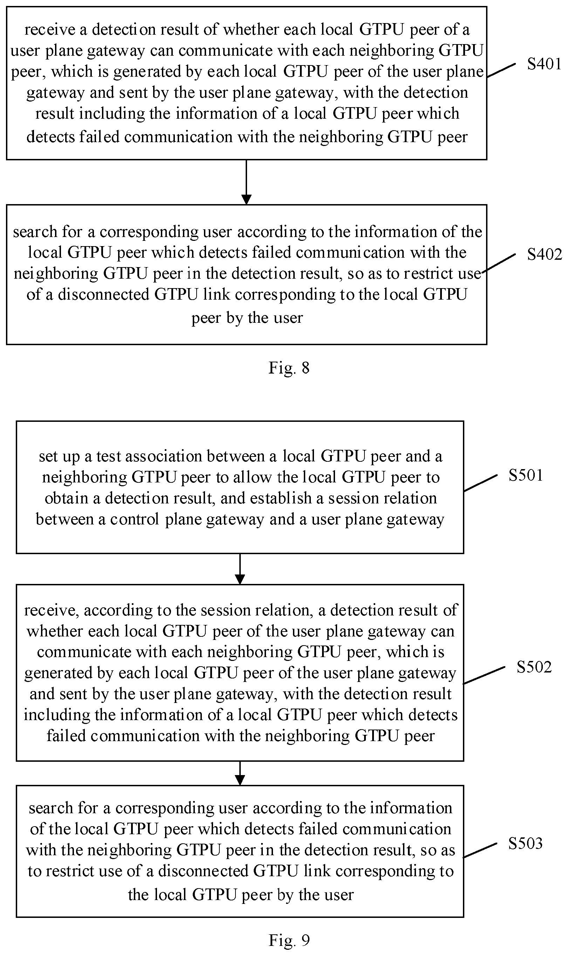

The present disclosure provides a method for reporting local GTPU peer information. As shown in Fig. 8, the method includes steps S401 to S402.

At step S401, receiving a detection result of whether each local GTPU peer of a user plane gateway can communicate with each neighboring GTPU peer, which is generated by each local GTPU peer of the user plane gateway and sent by the user plane gateway, with the detection result including the information of a local GTPU peer which detects failed communication with the neighboring GTPU peer.

At step S402, searching for a corresponding user according to the information of the local GTPU peer which detects failed communication with the neighboring GTPU peer in the detection result, so as to restrict use of a disconnected GTPU link corresponding to the local GTPU peer by the user.

In the present disclosure, a control plane receives the information of the neighboring GTPU peer with a disconnected path and the information of the local GTPU peer associated with such neighboring GTPU peer, which are reported by the user plane; and according to the information reported by the user plane (the neighboring GTPU peer and the local GTPU peer of the user plane gateway), the control plane can accurately deactivate an associated user without affecting users of other local GTPU peer of the user plane associated with the neighboring GTPU peer, thereby improving user experience.

The present disclosure provides a method for reporting local GTPU peer information. As shown in Fig. 9, the method includes steps S501 to S503.

At step S501, setting up a test association between a local GTPU peer and a neighboring GTPU peer to allow the local GTPU peer to obtain a detection result, and establishing a session relation between a control plane gateway and a user plane gateway.

At step S502, receiving, according to the session relation, a detection result of whether each local GTPU peer of the user plane gateway can communicate with each neighboring GTPU peer, which is generated by each local GTPU peer of the user plane gateway and sent by the user plane gateway, with the detection result including the information of a local GTPU peer which detects failed communication with the neighboring GTPU peer.

At step S503, searching for a corresponding user according to the information of the local GTPU peer which detects failed communication with the neighboring GTPU peer in the detection result, so as to restrict use of a disconnected GTPU link corresponding to the local GTPU peer by the user.

In the present disclosure, by setting up the test associations between the local GTPU peers and the neighboring GTPU peers, the local GTPU peers can detect and determine the communication status of each neighboring GTPU peer to obtain the detection result; and the detection result sent by the user plane gateway can be obtained by establishing the session relation.

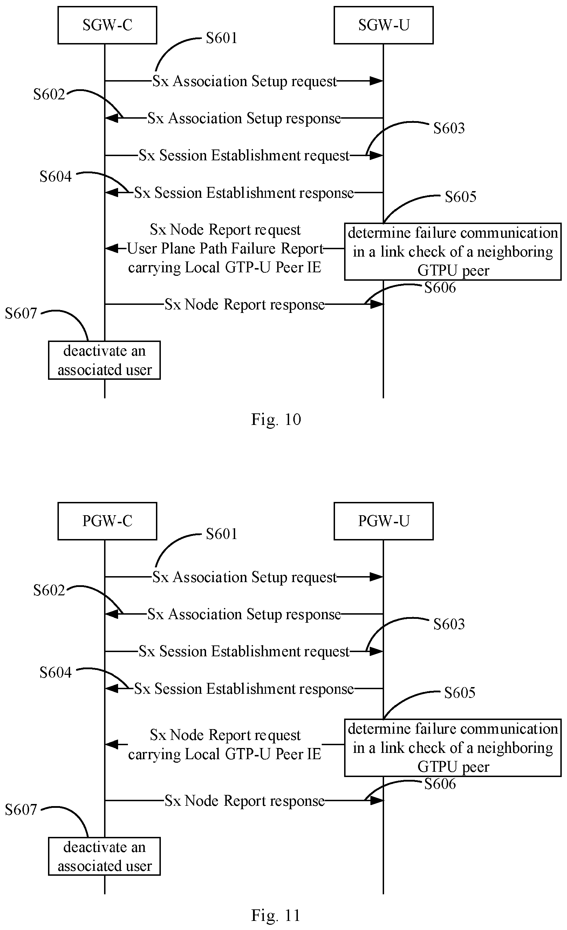

The present disclosure provides a method for reporting local GTPU peer information, in which an executing agency may be an SGW-C or a PGW-C. With reference to Figs. 10 and 11, the method includes steps S601 to S607.

At step S601, sending an Association Setup request message to a user plane gateway.

At step S602, receiving an Association Setup response message fed back by the user plane gateway, with the Association Setup response message carrying the information of a local GTPU peer of the user plane gateway.

At step S603, sending a Session Establishment request message to the user plane gateway according to the Association Setup response message, with the Session Establishment request message carrying the information of a neighboring GTPU peer.

At step S604, receiving a Session Establishment response message fed back by the user plane gateway to establish a session relation with the user plane gateway, and setting up a test association according to the information of the local GTPU peer and the information of the neighboring GTPU peer to allow the local GTPU peer to obtain a detection result, with the detection result including the information of a local GTPU peer which detects failed communication with the neighboring GTPU peer.

At step S605, receiving an Sx Node Report request message sent by the user plane gateway, and receiving the information of the local GTPU peer fed back by the user plane gateway.

At step S606, sending an Sx Node Report response message to the user plane gateway.

At step S607, searching for a corresponding user according to the information of the local GTPU peer which detects failed communication with the neighboring GTPU peer in the detection result, so as to restrict use of a disconnected GTPU link corresponding to the local GTPU peer by the user, thereby deactivating the associated user.

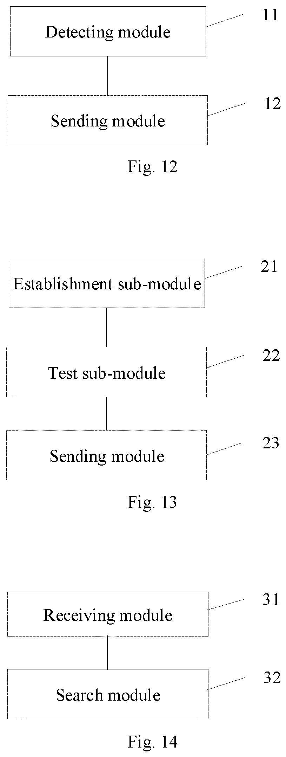

The present disclosure provides an apparatus for reporting local GTPU peer information. With reference to Fig. 12, the apparatus includes a detecting module 11 and a sending module 12.

The detecting module 11 is configured to detect, by each local GTPU peer of a user plane gateway, whether the local GTPU peer can communicate with each neighboring GTPU peer to obtain a detection result, with the detection result including the information of a local GTPU peer which detects failed communication with the neighboring GTPU peer.

The sending module 12 is configured to send the detection result to a control plane gateway to allow the control plane gateway to find a corresponding user according to the information of the local GTPU peer in the detection result and restrict use of a disconnected GTPU link corresponding to the local GTPU peer by the user.

The present disclosure provides an apparatus for reporting local GTPU peer information. With reference to Fig. 13, the apparatus includes an establishment sub-module 21, a test sub-module 22 and a sending module 23.

The establishment sub-module 21 is configured to set up a test association between a local GTPU peer and a neighboring GTPU peer, and establish a session relation between a user plane gateway and a control plane gateway to allow the user plane gateway to send a detection result to the control plane gateway according to the session relation.

The test sub-module 22 is configured to regularly send a link detection message by the local GTPU peer to the neighboring GTPU peer with which the test association is set up to detect whether the local GTPU peer can communicate with the neighboring GTPU peer with which the test association is set up, so as to obtain the detection result; and

The sending module 23 is configured to send the detection result to the control plane gateway to allow the control plane gateway to find a corresponding user according to the information of the local GTPU peer in the detection result and restrict use of a disconnected GTPU link corresponding to the local GTPU peer by the user.

In a process of implementing the present disclosure, the establishment sub-module is configured to receive an association setup request message fed back by the control plane gateway, send an association setup response message, which carries the information of a local GTPU peer of the user plane gateway, to the control plane gateway according to the received association setup request message, receive a session establishment request message, which carries the information of a neighboring GTPU peer, fed back by the control plane gateway, and set up the test association between the local GTPU peer and the neighboring GTPU peer according to the information of the neighboring GTPU peer, and establish the session relation between the user plane gateway and the control plane gateway according to the session establishment request message to allow the user plane gateway to send the detection result to the control plane gateway according to the session relation.

The present disclosure provides an apparatus for reporting local GTPU peer information. With reference to Fig. 14, the apparatus includes a receiving module 31 and a search module 32.

The receiving module 31 is configured to receive a detection result of whether each local GTPU peer of a user plane gateway can communicate with each neighboring GTPU peer, which is generated by each local GTPU peer of the user plane gateway and sent by the user plane gateway, with the detection result including the information of a local GTPU peer which detects failed communication with the neighboring GTPU peer.

The search module 32 is configured to search for a corresponding user according to the information of the local GTPU peer which detects failed communication with the neighboring GTPU peer in the detection result, so as to restrict use of a disconnected GTPU link corresponding to the local GTPU peer by the user.

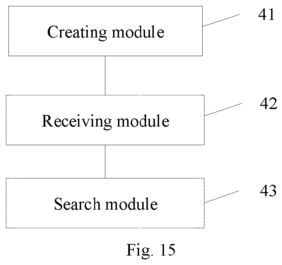

The present disclosure provides an apparatus for reporting local GTPU peer information. With reference to Fig. 15, the apparatus includes a creating module 41, a receiving module 42 and a search module 43.

The creating module 41 is configured to set up a test association between a local GTPU peer and a neighboring GTPU peer to allow the local GTPU peer to obtain a detection result, and establish a session relation between a control plane gateway and a user plane gateway, where a detection result sent by the user plane gateway is received according to the session relation.

The receiving module 42 is configured to receive the detection result of whether each local GTPU peer of the user plane gateway can communicate with each neighboring GTPU peer, which is generated by each local GTPU peer of the user plane gateway and sent by the user plane gateway, with the detection result including the information of a local GTPU peer which detects failed communication with the neighboring GTPU peer.

The search module 43 is configured to search for a corresponding user according to the information of the local GTPU peer which detects failed communication with the neighboring GTPU peer in the detection result, so as to restrict use of a disconnected GTPU link corresponding to the local GTPU peer by the user.

In a process of implementing the present disclosure, the creating module 41 is configured to: send an association setup request message to the user plane gateway, receive an association setup response message fed back by the user plane gateway, with the association setup response message carrying the information of a local GTPU peer of the user plane gateway, send a session establishment request message to the user plane gateway according to the association setup response message, with the session establishment request message carrying the information of a neighboring GTPU peer, and receive a session establishment response message fed back by the user plane gateway to establish the session relation with the user plane gateway, and set up the test association according to the information of the local GTPU peer and the information of the neighboring GTPU peer to allow the local GTPU peer to obtain the detection result.

The present disclosure provides a storage medium having a computer program stored therein. When executed by a processor, the computer program implements the following method steps: detecting, by each local GTPU peer of a user plane gateway, whether the local GTPU peer can communicate with each neighboring GTPU peer to obtain a detection result, with the detection result including the information of a local GTPU peer which detects failed communication with the neighboring GTPU peer; and sending the detection result to a control plane gateway to allow the control plane gateway to find a corresponding user according to the information of the local GTPU peer in the detection result and restrict use of a disconnected GTPU link corresponding to the local GTPU peer by the user.

The implementation processes of the above method can be found in the above embodiments, and thus will not be repeated herein.

The present disclosure provides a storage medium having a computer program stored therein. When executed by a processor, the computer program implements the following method steps: receiving a detection result of whether each local GTPU peer of a user plane gateway can communicate with each neighboring GTPU peer, which is generated by each local GTPU peer of the user plane gateway and sent by the user plane gateway, with the detection result including the information of a local GTPU peer which detects failed communication with the neighboring GTPU peer; and searching for a corresponding user according to the information of the local GTPU peer which detects failed communication with the neighboring GTPU peer in the detection result, so as to restrict use of a disconnected GTPU link corresponding to the local GTPU peer by the user.

The implementation processes of the above method can be found in the above embodiments, and thus will not be repeated herein.

It should be noted that, in the present disclosure, the terms "includes", "comprises" or any other variation thereof are intended to indicate a non-exclusive inclusion, so that a process, method, article, or device, which includes a series of elements, does not only include those listed elements but also include other elements which are not explicitly listed, or the elements inherent in such process, method, article, or device. If there are no more limitations, limiting an element by "including a..." does not exclude the existence of other identical elements in the process, method, article, or device which includes the element.

The ordinal numbers of the above embodiments of the present disclosure are merely for description, and do not indicate a preferential order of the embodiments.

Through the above description of the implementations, those of ordinary skill in the art can clearly understand that the methods according to the above embodiments may be implemented by means of software plus a necessary general hardware platform, or by hardware, but the former is preferable in most cases. Based on such understanding, the essence of the technical solutions of the present disclosure or a part of the technical solutions of the present disclosure contributing to the related art can be embodied in a form of a software product, which is stored in a storage medium (such as an ROM/RAM, a magnetic disk, or an optical disc) and includes several instructions to enable a terminal (which may be a mobile phone, a computer, a server, an air conditioner, or a network device) to execute the methods according to the embodiments of the present disclosure.

In the embodiments of the present disclosure, when reporting a message of failed communication with a neighboring GTPU peer to the control plane gateway, the user plane gateway also sends the information of the local GTPU peer which determines the failed communication to the control plane gateway, so that the control plane gateway can accurately cancel the user associated with the neighboring GTPU peer after being informed of the communication status of all the other local GTPU peers with the neighboring GTPU peer, thereby improving user experience.

The embodiments of the present disclosure are described above with reference to the drawings, but the present disclosure is not limited to the above implementations which are merely for illustration rather than for limitation.

## Claims

1. A method performed by a user plane gateway for reporting local General Packet Radio Service Tunnelling Protocol User Plane, called GTPU, peer information, comprising:
detecting (S101), by each local GTPU peer of the user plane gateway, whether the local GTPU peer is capable of communicating with each neighboring GTPU peer to obtain a detection result, with the detection result comprising information of a local GTPU peer which detects failed communication with the neighboring GTPU peer; and
sending (S102, S203, S306) the detection result to a control plane gateway to allow the control plane gateway to find a corresponding user according to the information of the local GTPU peer in the detection result and restrict use of a disconnected GTPU link corresponding to the local GTPU peer by the user.

2. The method for reporting local GTPU peer information of claim 1, wherein the step of detecting (S101), by each local GTPU peer of the user plane gateway, whether the local GTPU peer is capable of communicating with each neighboring GTPU peer to obtain the detection result comprising:
setting up (S201) a test association between a local GTPU peer and a neighboring GTPU peer, and establishing (S201) a session relation between the user plane gateway and the control plane gateway to allow the user plane gateway to send the detection result to the control plane gateway according to the session relation; and
regularly sending (S202, S305) a link detection message by the local GTPU peer to the neighboring GTPU peer with which the test association is set up to detect whether the local GTPU peer is capable of communicating with the neighboring GTPU peer with which the test association is set up, so as to obtain the detection result.

3. The method for reporting local GTPU peer information of claim 2, wherein the step of setting up (S201) the test association between a local GTPU peer and a neighboring GTPU peer and establishing (S201) the session relation between the user plane gateway and the control plane gateway to allow the user plane gateway to send the detection result to the control plane gateway according to the session relation comprising:
receiving (S301) an association setup request message fed back by the control plane gateway;
sending (S302) an association setup response message, which carries information of a local GTPU peer of the user plane gateway, to the control plane gateway according to the received association setup request message;
receiving (S303) a session establishment request message, which carries information of a neighboring GTPU peer, fed back by the control plane gateway; and
setting up (S304) the test association between the local GTPU peer and the neighboring GTPU peer according to the information of the neighboring GTPU peer, and establishing (S304) the session relation between the user plane gateway and the control plane gateway according to the session establishment request message to allow the user plane gateway to send the detection result to the control plane gateway according to the session relation.

4. A method performed by a control plane gateway for reporting local General Packet Radio Service Tunnelling Protocol User Plane, called GTPU, peer information, comprising:
receiving (S401, S502) a detection result of whether each local GTPU peer of a user plane gateway is capable of communicating with each neighboring GTPU peer, which is generated by each local GTPU peer of the user plane gateway and sent by the user plane gateway, with the detection result comprising information of a local GTPU peer which detects failed communication with the neighboring GTPU peer; and
searching (S402, S503) for a corresponding user according to the information of the local GTPU peer which detects failed communication with the neighboring GTPU peer in the detection result, so as to restrict use of a disconnected GTPU link corresponding to the local GTPU peer by the user.

5. The method for reporting local GTPU peer information of claim 4, before the step of receiving (S502) the detection result sent by the user plane gateway, further comprising:
setting up (S501) a test association between a local GTPU peer and a neighboring GTPU peer to allow the local GTPU peer to obtain the detection result, and establishing (S501) a session relation between the control plane gateway and the user plane gateway;
wherein the detection result sent by the user plane gateway is received according to the session relation.

6. The method for reporting local GTPU peer information of claim 5, wherein the step of setting up (S501) the test association between a local GTPU peer and a neighboring GTPU peer to allow the local GTPU peer to obtain the detection result and establishing (S501) the session relation between the control plane gateway and the user plane gateway comprising:
sending (S601) an association setup request message to the user plane gateway;
receiving (S602) an association setup response message fed back by the user plane gateway, with the association setup response message carrying information of a local GTPU peer of the user plane gateway;
sending (S603) a session establishment request message to the user plane gateway according to the association setup response message, with the session establishment request message carrying information of a neighboring GTPU peer;
and
receiving (S604) a session establishment response message fed back by the user plane gateway to establish the session relation with the user plane gateway, and setting up the test association according to the information of the local GTPU peer and the information of the neighboring GTPU peer to allow the local GTPU peer to obtain the detection result.

7. An apparatus for use in a user plane gateway for reporting local General Packet Radio Service Tunnelling Protocol User Plane, called GTPU, peer information, comprising:
a detecting module (11) configured to detect, by each local GTPU peer of the user plane gateway, whether the local GTPU peer is capable of communicating with each neighboring GTPU peer to obtain a detection result, with the detection result comprising information of a local GTPU peer which detects failed communication with the neighboring GTPU peer; and
a sending module (12, 23) configured to send the detection result to a control plane gateway to allow the control plane gateway to find a corresponding user according to the information of the local GTPU peer in the detection result and restrict use of a disconnected GTPU link corresponding to the local GTPU peer by the user.

8. The apparatus for reporting local GTPU peer information of claim 7, wherein the detecting module (11) comprises:
an establishment sub-module (21) configured to set up a test association between a local GTPU peer and a neighboring GTPU peer, and establish a session relation between the user plane gateway and the control plane gateway to allow the user plane gateway to send the detection result to the control plane gateway according to the session relation; and
a test sub-module (22) configured to regularly send a link detection message by the local GTPU peer to the neighboring GTPU peer with which the test association is set up to detect whether the local GTPU peer is capable of communicating with the neighboring GTPU peer with which the test association is set up, so as to obtain the detection result.

9. The apparatus for reporting local GTPU peer information of claim 8, wherein the establishment sub-module (21) is configured to:
receive an association setup request message fed back by the control plane gateway,
send an association setup response message, which carries information of a local GTPU peer of the user plane gateway, to the control plane gateway according to the received association setup request message,
receive a session establishment request message, which carries information of a neighboring GTPU peer, fed back by the control plane gateway, and
set up the test association between the local GTPU peer and the neighboring GTPU peer according to the information of the neighboring GTPU peer, and establish the session relation between the user plane gateway and the control plane gateway according to the session establishment request message to allow the user plane gateway to send the detection result to the control plane gateway according to the session relation.

10. An apparatus for use in a control plane gateway for reporting local General Packet Radio Service Tunnelling Protocol User Plane, called GTPU, peer information, comprising:
a receiving module (31, 42) configured to receive a detection result of whether each local GTPU peer of a user plane gateway is capable of communicating with each neighboring GTPU peer, which is generated by each local GTPU peer of the user plane gateway and sent by the user plane gateway, with the detection result comprising information of a local GTPU peer which detects failed communication with the neighboring GTPU peer; and
a search module (32, 43) configured to search for a corresponding user according to the information of the local GTPU peer which detects failed communication with the neighboring GTPU peer in the detection result, so as to restrict use of a disconnected GTPU link corresponding to the local GTPU peer by the user.

11. The apparatus for reporting local GTPU peer information of claim 10, further comprising a creating module (41) configured to set up a test association between a local GTPU peer and a neighboring GTPU peer to allow the local GTPU peer to obtain the detection result, and establish a session relation between the control plane gateway and the user plane gateway,
wherein the detection result sent by the user plane gateway is received according to the session relation.

12. The apparatus for reporting local GTPU peer information of claim 11,
wherein the creating module (41) is configured to:
send an association setup request message to the user plane gateway,
receive an association setup response message fed back by the user plane gateway, with the association setup response message carrying information of a local GTPU peer of the user plane gateway,
send a session establishment request message to the user plane gateway according to the association setup response message, with the session establishment request message carrying information of a neighboring GTPU peer, and
receive a session establishment response message fed back by the user plane gateway to establish the session relation with the user plane gateway, and set up the test association according to the information of the local GTPU peer and the information of the neighboring GTPU peer to allow the local GTPU peer to obtain the detection result.

13. A storage medium having a computer program stored therein which, when executed by a processor of a user plane gateway, cause the user plane gateway to carry out a method according to one of claims 1 to 3.

14. A storage medium having a computer program stored therein which, when executed by a processor of a control plane gateway, cause the control plane gateway to carry out a method according to any one of claims 4 to 6.

## Patentansprüche

1. Verfahren, das von einem Benutzerebenen-Gateway zum Berichten von lokalen "General Packet Radio Service Tunnelling Protocol User Plane"- bzw. GTPU-Peer-Informationen durchgeführt wird, umfassend:
Detektieren (S101), durch jeden lokalen GTPU-Peer des Benutzerebenen-Gateways, ob der lokale GTPU-Peer in der Lage ist, mit jedem benachbarten GTPU-Peer zu kommunizieren, um ein Detektionsergebnis zu erhalten, wobei das Detektionsergebnis Informationen eines lokalen GTPU-Peers umfasst, der eine fehlgeschlagene Kommunikation mit dem benachbarten GTPU-Peer detektiert; und
Senden (S102, S203, S306) des Detektionsergebnisses an ein Steuerebenen-Gateway, um dem Steuerebenen-Gateway zu erlauben, einen entsprechenden Benutzer gemäß den Informationen des lokalen GTPU-Peers in dem Detektionsergebnis zu finden und die Verwendung einer getrennten GTPU-Verbindung, die dem lokalen GTPU-Peer entspricht, durch den Benutzer zu beschränken.

2. Verfahren zum Berichten von lokalen GTPU-Peer-Informationen nach Anspruch 1, wobei der Schritt des Detektierens (S101), durch jeden lokalen GTPU-Peer des Benutzerebenen-Gateways, ob der lokale GTPU-Peer in der Lage ist, mit jedem benachbarten GTPU-Peer zu kommunizieren, um das Detektionsergebnis zu erhalten, umfasst:
Einstellen (S201) einer Testassoziation zwischen einem lokalen GTPU-Peer und einem benachbarten GTPU-Peer und Herstellen (S201) einer Sitzungsbeziehung zwischen dem Benutzerebenen-Gateway und dem Steuerebenen-Gateway, um dem Benutzerebenen-Gateway zu erlauben, das Detektionsergebnis gemäß der Sitzungsbeziehung an das Steuerebenen-Gateway zu senden; und
regelmäßiges Senden (S202, S305) einer Verbindungsdetektionsnachricht durch den lokalen GTPU-Peer an den benachbarten GTPU-Peer, mit dem die Testassoziation eingestellt ist, um zu detektieren, ob der lokale GTPU-Peer in der Lage ist, mit dem benachbarten GTPU-Peer zu kommunizieren, mit dem die Testassoziation eingestellt ist, um das Detektionsergebnis zu erhalten.

3. Verfahren zum Berichten von lokalen GTPU-Peer-Informationen nach Anspruch 2, wobei der Schritt des Einstellens (S201) der Testassoziation zwischen einem lokalen GTPU-Peer und einem benachbarten GTPU-Peer und Herstellen (S201) der Sitzungsbeziehung zwischen dem Benutzerebenen-Gateway und dem Steuerebenen-Gateway, um dem Benutzerebenen-Gateway zu erlauben, das Detektionsergebnis gemäß der Sitzungsbeziehung an das Steuerebenen-Gateway zu senden, umfasst:
Empfangen (S301) einer Assoziationsaufbau-Anforderungsnachricht, die durch das Steuerebenen-Gateway zurückgemeldet wird;
Senden (S302) einer Assoziationsaufbau-Antwortnachricht, die Informationen eines lokalen GTPU-Peers des Benutzerebenen-Gateways trägt, an das Steuerebenen-Gateway gemäß der empfangenen Assoziationsaufbau-Anforderungsnachricht;
Empfangen (S303) einer Sitzungsaufbau-Anforderungsnachricht, die Informationen eines benachbarten GTPU-Peers trägt, die durch das Steuerebenen-Gateway zurückgemeldet wird; und
Einstellen (S304) der Testassoziation zwischen dem lokalen GTPU-Peer und dem benachbarten GTPU-Peer gemäß den Informationen des benachbarten GTPU-Peers und Herstellen (S304) der Sitzungsbeziehung zwischen dem Benutzerebenen-Gateway und dem Steuerebenen-Gateway gemäß der Sitzungsaufbau-Anforderungsnachricht, um dem Benutzerebenen-Gateway zu erlauben, das Detektionsergebnis gemäß der Sitzungsbeziehung an das Steuerebenen-Gateway zu senden.

4. Verfahren, das von einem Steuerebenen-Gateway zum Berichten von lokalen "General Packet Radio Service Tunnelling Protocol User Plane"- bzw. GTPU-Peer-Informationen durchgeführt wird, umfassend:
Empfangen (S401, S502) eines Detektionsergebnisses, ob jeder lokale GTPU-Peer eines Benutzerebenen-Gateways in der Lage ist, mit jedem benachbarten GTPU-Peer zu kommunizieren, das durch jeden lokalen GTPU-Peer des Benutzerebenen-Gateways erzeugt und durch das Benutzerebenen-Gateway gesendet wird, wobei das Detektionsergebnis Informationen eines lokalen GTPU-Peers umfasst, der eine fehlgeschlagene Kommunikation mit dem benachbarten GTPU-Peer detektiert; und
Suchen (S402, S503) nach einem entsprechenden Benutzer gemäß den Informationen des lokalen GTPU-Peers, der eine fehlgeschlagene Kommunikation mit dem benachbarten GTPU-Peer in dem Detektionsergebnis detektiert, um die Verwendung einer getrennten GTPU-Verbindung, die dem lokalen GTPU-Peer entspricht, durch den Benutzer zu beschränken.

5. Verfahren zum Berichten von lokalen GTPU-Peer-Informationen nach Anspruch 4, vor dem Schritt des Empfangens (S502) des Detektionsergebnisses, das durch das Benutzerebenen-Gateway gesendet wird, ferner umfassend:
Einstellen (S501) einer Testassoziation zwischen einem lokalen GTPU-Peer und einem benachbarten GTPU-Peer, um dem lokalen GTPU-Peer zu erlauben, das Detektionsergebnis zu erhalten, und Herstellen (S501) einer Sitzungsbeziehung zwischen dem Steuerebenen-Gateway und dem Benutzerebenen-Gateway;
wobei das Detektionsergebnis, das durch das Benutzerebenen-Gateway gesendet wird, gemäß der Sitzungsbeziehung empfangen wird.

6. Verfahren zum Berichten von lokalen GTPU-Peer-Informationen nach Anspruch 5, wobei der Schritt des Einstellens (S501) der Testassoziation zwischen einem lokalen GTPU-Peer und einem benachbarten GTPU-Peer, um dem lokalen GTPU-Peer zu erlauben, das Detektionsergebnis zu erhalten, und Herstellen (S501) der Sitzungsbeziehung zwischen dem Steuerebenen-Gateway und dem Benutzerebenen-Gateway umfasst:
Senden (S601) einer Assoziationsaufbau-Anforderungsnachricht an das Benutzerebenen-Gateway;
Empfangen (S602) einer Assoziationsaufbau-Antwortnachricht, die durch das Benutzerebenen-Gateway zurückgemeldet wird, wobei die Assoziationsaufbau-Antwortnachricht Informationen eines lokalen GTPU-Peers des Benutzerebenen-Gateways trägt;
Senden (S603) einer Sitzungsaufbau-Anforderungsnachricht an das Benutzerebenen-Gateway gemäß der Assoziationsaufbau-Antwortnachricht, wobei die Sitzungsaufbau-Anforderungsnachricht Informationen eines benachbarten GTPU-Peers trägt; und
Empfangen (S604) einer Sitzungsaufbau-Antwortnachricht, die durch das Benutzerebenen-Gateway zurückgemeldet wird, um die Sitzungsbeziehung mit dem Benutzerebenen-Gateway herzustellen, und Einstellen der Testassoziation gemäß den Informationen des lokalen GTPU-Peers und den Informationen des benachbarten GTPU-Peers, um dem lokalen GTPU-Peer zu erlauben, das Detektionsergebnis zu erhalten.

7. Vorrichtung zur Verwendung in einem Benutzerebenen-Gateway zum Berichten von lokalen "General Packet Radio Service Tunnelling Protocol User Plane"- bzw. GTPU-Peer-Informationen, umfassend:
ein Detektionsmodul (11), das konfiguriert ist, um durch jeden lokalen GTPU-Peer des Benutzerebenen-Gateways zu detektieren, ob der lokale GTPU-Peer in der Lage ist, mit jedem benachbarten GTPU-Peer zu kommunizieren, um ein Detektionsergebnis zu erhalten, wobei das Detektionsergebnis Informationen eines lokalen GTPU-Peers umfasst, der eine fehlgeschlagene Kommunikation mit dem benachbarten GTPU-Peer detektiert; und
ein Sendemodul (12, 23), das konfiguriert ist, um das Detektionsergebnis an ein Steuerebenen-Gateway zu senden, um dem Steuerebenen-Gateway zu erlauben, einen entsprechenden Benutzer gemäß den Informationen des lokalen GTPU-Peers in dem Detektionsergebnis zu finden und die Verwendung einer getrennten GTPU-Verbindung, die dem lokalen GTPU-Peer entspricht, durch den Benutzer zu beschränken.

8. Vorrichtung zum Berichten von lokalen GTPU-Peer-Informationen nach Anspruch 7, wobei das Detektionsmodul (11) umfasst:
ein Einrichtungs-Teilmodul (21), das konfiguriert ist, um eine Testassoziation zwischen einem lokalen GTPU-Peer und einem benachbarten GTPU-Peer einzustellen und eine Sitzungsbeziehung zwischen dem Benutzerebenen-Gateway und dem Steuerebenen-Gateway herzustellen, um dem Benutzerebenen-Gateway zu erlauben, das Detektionsergebnis gemäß der Sitzungsbeziehung an das Steuerebenen-Gateway zu senden; und
ein Test-Teilmodul (22), das konfiguriert ist, um regelmäßig eine Verbindungsdetektionsnachricht durch den lokalen GTPU-Peer an den benachbarten GTPU-Peer zu senden, mit dem die Testassoziation eingestellt ist, um zu detektieren, ob der lokale GTPU-Peer in der Lage ist, mit dem benachbarten GTPU-Peer zu kommunizieren, mit dem die Testassoziation eingestellt ist, um das Detektionsergebnis zu erhalten.

9. Vorrichtung zum Berichten von lokalen GTPU-Peer-Informationen nach Anspruch 8, wobei das Einrichtungs-Teilmodul (21) konfiguriert ist, um:
eine Assoziationsaufbau-Anforderungsnachricht zu empfangen, die durch das Steuerebenen-Gateway zurückgemeldet wird,
eine Assoziationsaufbau-Antwortnachricht, die Informationen eines lokalen GTPU-Peers des Benutzerebenen-Gateways trägt, an das Steuerebenen-Gateway gemäß der empfangenen Assoziationsaufbau-Anforderungsnachricht zu senden,
eine Sitzungsaufbau-Anforderungsnachricht, die Informationen eines benachbarten GTPU-Peers trägt, die durch das Steuerebenen-Gateway zurückgemeldet wird, zu empfangen, und
die Testassoziation zwischen dem lokalen GTPU-Peer und dem benachbarten GTPU-Peer gemäß den Informationen des benachbarten GTPU-Peers einzustellen und die Sitzungsbeziehung zwischen dem Benutzerebenen-Gateway und dem Steuerebenen-Gateway gemäß der Sitzungsaufbau-Anforderungsnachricht herzustellen, um dem Benutzerebenen-Gateway zu erlauben, das Detektionsergebnis gemäß der Sitzungsbeziehung an das Steuerebenen-Gateway zu senden.

10. Vorrichtung zur Verwendung in einem Steuerebenen-Gateway zum Berichten von lokalen "General Packet Radio Service Tunnelling Protocol User Plane"- bzw. GTPU-Peer-Informationen, umfassend:
ein Empfangsmodul (31, 42), das konfiguriert ist, um ein Detektionsergebnis zu empfangen, ob jeder lokale GTPU-Peer eines Benutzerebenen-Gateways in der Lage ist, mit jedem benachbarten GTPU-Peer zu kommunizieren, das durch jeden lokalen GTPU-Peer des Benutzerebenen-Gateways erzeugt und durch das Benutzerebenen-Gateway gesendet wird, wobei das Detektionsergebnis Informationen eines lokalen GTPU-Peers umfasst, der eine fehlgeschlagene Kommunikation mit dem benachbarten GTPU-Peer detektiert; und
ein Suchmodul (32, 43), das konfiguriert ist, um nach einem entsprechenden Benutzer gemäß den Informationen des lokalen GTPU-Peers zu suchen, der eine fehlgeschlagene Kommunikation mit dem benachbarten GTPU-Peer in dem Detektionsergebnis detektiert, um die Verwendung einer getrennten GTPU-Verbindung, die dem lokalen GTPU-Peer entspricht, durch den Benutzer zu beschränken.

11. Vorrichtung zum Berichten von lokalen GTPU-Peer-Informationen nach Anspruch 10, ferner umfassend ein Erzeugungsmodul (41), das konfiguriert ist, um eine Testassoziation zwischen einem lokalen GTPU-Peer und einem benachbarten GTPU-Peer einzustellen, um dem lokalen GTPU-Peer zu erlauben, das Detektionsergebnis zu erhalten, und eine Sitzungsbeziehung zwischen dem Steuerebenen-Gateway und dem Benutzerebenen-Gateway herzustellen,
wobei das Detektionsergebnis, das durch das Benutzerebenen-Gateway gesendet wird, gemäß der Sitzungsbeziehung empfangen wird.

12. Vorrichtung zum Berichten von lokalen GTPU-Peer-Informationen nach Anspruch 11, wobei das Erzeugungsmodul (41) konfiguriert ist, um:
eine Assoziationsaufbau-Anforderungsnachricht an das Benutzerebenen-Gateway zu senden,
eine Assoziationsaufbau-Antwortnachricht zu empfangen, die durch das Benutzerebenen-Gateway zurückgemeldet wird, wobei die Assoziationsaufbau-Antwortnachricht Informationen eines lokalen GTPU-Peers des Benutzerebenen-Gateways trägt,
eine Sitzungsaufbau-Anforderungsnachricht an das Benutzerebenen-Gateway gemäß der Assoziationsaufbau-Antwortnachricht zu senden, wobei die Sitzungsaufbau-Anforderungsnachricht Informationen eines benachbarten GTPU-Peers trägt, und
eine Sitzungsaufbau-Antwortnachricht zu empfangen, die durch das Benutzerebenen-Gateway zurückgemeldet wird, um die Sitzungsbeziehung mit dem Benutzerebenen-Gateway herzustellen, und die Testassoziation gemäß den Informationen des lokalen GTPU-Peers und den Informationen des benachbarten GTPU-Peers einzustellen, um dem lokalen GTPU-Peer zu erlauben, das Detektionsergebnis zu erhalten.

13. Speichermedium mit einem darin gespeicherten Computerprogramm, das, wenn es durch einen Prozessor eines Benutzerebenen-Gateways ausgeführt wird, das Benutzerebenen-Gateway veranlasst, ein Verfahren nach einem der Ansprüche 1 bis 3 auszuführen.

14. Speichermedium mit einem darin gespeicherten Computerprogramm, das, wenn es durch einen Prozessor eines Steuerebenen-Gateways ausgeführt wird, das Steuerebenen-Gateway veranlasst, ein Verfahren nach einem der Ansprüche 4 bis 6 auszuführen.

## Revendications

1. Procédé réalisé par une passerelle de plan utilisateur pour rapporter des informations de pair de plan utilisateur de protocole de tunnellisation de service général de radiocommunication par paquets, appelé GTPU, local, comprenant les étapes suivantes :
détecter (S101), par chaque pair GTPU local de la passerelle de plan utilisateur, si le pair GTPU local est capable de communiquer avec chaque pair GTPU voisin pour obtenir un résultat de détection, le résultat de détection comprenant des informations d'un pair GTPU local qui détecte une communication défaillante avec le pair GTPU voisin ; et
transmettre (S102, S203, S306) le résultat de détection à une passerelle de plan de contrôle pour permettre à la passerelle de plan de contrôle de trouver un utilisateur correspondant en fonction des informations du pair GTPU local dans le résultat de détection et restreindre l'utilisation d'une liaison GTPU déconnectée correspondant au pair GTPU local par l'utilisateur.

2. Procédé pour rapporter des informations de pair GTPU local selon la revendication 1, dans lequel l'étape consistant à détecter (S101), par chaque pair GTPU local de la passerelle de plan utilisateur, si le pair GTPU local est capable de communiquer avec chaque pair GTPU voisin pour obtenir le résultat de détection comprend les étapes suivantes :
définir (S201) une association de test entre un pair GTPU local et un pair GTPU voisin, et établir (S201) une relation de session entre la passerelle de plan utilisateur et la passerelle de plan de contrôle pour permettre à la passerelle de plan utilisateur d'envoyer le résultat de détection à la passerelle de plan de contrôle en fonction de la relation de session ; et
transmettre régulièrement (S202, S305) un message de détection de liaison par le pair GTPU local au pair GTPU voisin avec lequel l'association de test est définie pour détecter si le pair GTPU local est capable de communiquer avec le pair GTPU voisin avec lequel l'association de test est définie, de manière à obtenir le résultat de détection.

3. Procédé pour rapporter des informations de pair GTPU local selon la revendication 2, dans lequel l'étape consistant à définir (S201) l'association de test entre un pair GTPU local et un pair GTPU voisin et établir (S201) la relation de session entre la passerelle de plan utilisateur et la passerelle de plan de contrôle pour permettre à la passerelle de plan utilisateur d'envoyer le résultat de détection à la passerelle de plan de contrôle en fonction de la relation de session comprend les étapes suivantes :
recevoir (S301) un message de demande d'établissement d'association renvoyé par la passerelle de plan de contrôle ;
transmettre (S302) un message de réponse d'établissement d'association, qui transporte des informations d'un pair GTPU local de la passerelle de plan d'utilisateur, à la passerelle de plan de contrôle en fonction du message de demande d'établissement d'association reçu ;
recevoir (S303) un message de demande d'établissement de session, qui transporte des informations d'un pair GTPU voisin, renvoyé par la passerelle de plan de contrôle ; et
définir (S304) l'association de test entre le pair GTPU local et le pair GTPU voisin en fonction des informations du pair GTPU voisin, et établir (S304) la relation de session entre la passerelle de plan utilisateur et la passerelle de plan de contrôle en fonction du message de demande d'établissement de session pour permettre à la passerelle de plan utilisateur d'envoyer le résultat de détection à la passerelle de plan de contrôle en fonction de la relation de session.

4. Procédé réalisé par une passerelle de plan de contrôle pour rapporter des informations de pair de plan utilisateur de protocole de tunnellisation de service général de radiocommunication par paquets, appelé GTPU, local, comprenant les étapes suivantes :
recevoir (S401, S502) un résultat de détection indiquant si chaque pair GTPU local d'une passerelle de plan utilisateur est capable de communiquer avec chaque pair GTPU voisin, qui est généré par chaque pair GTPU local de la passerelle de plan utilisateur et transmis par la passerelle de plan utilisateur, le résultat de détection comprenant des informations d'un pair GTPU local qui détecte une communication défaillante avec le pair GTPU voisin ; et
rechercher (S402, S503) un utilisateur correspondant en fonction des informations du pair GTPU local qui détecte une communication défaillante avec le pair GTPU voisin dans le résultat de détection, de manière à restreindre l'utilisation d'une liaison GTPU déconnectée correspondant au pair GTPU local par l'utilisateur.

5. Procédé pour rapporter des informations de pair GTPU local selon la revendication 4, avant l'étape consistant à recevoir (S502) le résultat de détection transmis par la passerelle de plan d'utilisateur, comprenant en outre les étapes suivantes :
définir (S501) une association de test entre un pair GTPU local et un pair GTPU voisin pour permettre au pair GTPU local d'obtenir le résultat de détection, et établir (S501) une relation de session entre la passerelle de plan de contrôle et la passerelle de plan utilisateur ;
dans lequel le résultat de détection transmis par la passerelle de plan d'utilisateur est reçu en fonction de la relation de session.

6. Procédé pour rapporter des informations de pair GTPU local selon la revendication 5, dans lequel l'étape consistant à définir (S501) l'association de test entre un pair GTPU local et un pair GTPU voisin pour permettre au pair GTPU local d'obtenir le résultat de détection et établir (S501) la relation de session entre la passerelle de plan de contrôle et la passerelle de plan utilisateur comprend les étapes suivantes :
transmettre (S601) un message de demande d'établissement d'association à la passerelle de plan utilisateur ;
recevoir (S602) un message de réponse d'établissement d'association renvoyé par la passerelle de plan d'utilisateur, le message de réponse d'établissement d'association transportant des informations d'un pair GTPU local de la passerelle de plan d'utilisateur ;
transmettre (S603) un message de demande d'établissement de session à la passerelle de plan d'utilisateur en fonction du message de réponse d'établissement d'association, le message de demande d'établissement de session transportant des informations d'un pair GTPU voisin ; et
recevoir (S604) un message de réponse d'établissement de session renvoyé par la passerelle de plan d'utilisateur pour établir la relation de session avec la passerelle de plan d'utilisateur, et définir l'association de test en fonction des informations du pair GTPU local et des informations du pair GTPU voisin pour permettre au pair GTPU local d'obtenir le résultat de détection.

7. Appareil à utiliser dans une passerelle de plan d'utilisateur pour rapporter des informations de pair de plan utilisateur de protocole de tunnellisation de service général de radiocommunication par paquets, appelé GTPU, local, comprenant :
un module de détection (11) configuré pour détecter, par chaque pair GTPU local de la passerelle de plan utilisateur, si le pair GTPU local est capable de communiquer avec chaque pair GTPU voisin pour obtenir un résultat de détection, le résultat de détection comprenant des informations d'un pair GTPU local qui détecte une communication défaillante avec le pair GTPU voisin ; et
un module de transmission (12, 23) configuré pour transmettre le résultat de détection à une passerelle de plan de contrôle pour permettre à la passerelle de plan de contrôle de trouver un utilisateur correspondant en fonction des informations du pair GTPU local dans le résultat de détection et restreindre l'utilisation d'une liaison GTPU déconnectée correspondant au pair GTPU local par l'utilisateur.

8. Appareil pour rapporter des informations de pair GTPU local selon la revendication 7, dans lequel le module de détection (11) comprend :
un sous-module d'établissement (21) configuré pour définir une association de test entre un pair GTPU local et un pair GTPU voisin, et établir une relation de session entre la passerelle de plan d'utilisateur et la passerelle de plan de contrôle pour permettre à la passerelle de plan utilisateur d'envoyer le résultat de détection à la passerelle de plan de contrôle en fonction de la relation de session ; et
un sous-module de test (22) configuré pour transmettre régulièrement un message de détection de liaison par le pair GTPU local au pair GTPU voisin avec lequel l'association de test est définie pour détecter si le pair GTPU local est capable de communiquer avec le pair GTPU voisin avec lequel l'association de test est définie, de manière à obtenir le résultat de détection.

9. Appareil pour rapporter des informations de pair GTPU local selon la revendication 8, dans lequel le sous-module d'établissement (21) est configuré pour :
recevoir un message de demande d'établissement d'association renvoyé par la passerelle de plan de contrôle,
transmettre un message de réponse d'établissement d'association, qui transporte des informations d'un pair GTPU local de la passerelle de plan d'utilisateur, à la passerelle de plan de contrôle en fonction du message de demande d'établissement d'association reçu,
recevoir un message de demande d'établissement de session, qui transporte des informations d'un pair GTPU voisin, renvoyé par la passerelle de plan de contrôle, et
définir l'association de test entre le pair GTPU local et le pair GTPU voisin en fonction des informations du pair GTPU voisin, et établir la relation de session entre la passerelle de plan d'utilisateur et la passerelle de plan de contrôle en fonction du message de demande d'établissement de session pour permettre à la passerelle de plan d'utilisateur d'envoyer le résultat de détection à la passerelle de plan de contrôle en fonction de la relation de session.

10. Appareil à utiliser dans une passerelle de plan de contrôle pour rapporter des informations de pair de plan d'utilisateur de protocole de tunnellisation de service général de radiocommunication par paquets, appelé GTPU, local, comprenant :
un module de réception (31, 42) configuré pour recevoir un résultat de détection indiquant si chaque pair GTPU local d'une passerelle de plan d'utilisateur est capable de communiquer avec chaque pair GTPU voisin, qui est généré par chaque pair GTPU local de la passerelle de plan d'utilisateur et transmis par la passerelle de plan utilisateur, le résultat de détection comprenant des informations d'un pair GTPU local qui détecte une communication défaillante avec le pair GTPU voisin ; et
un module de recherche (32, 43) configuré pour rechercher un utilisateur correspondant en fonction des informations du pair GTPU local qui détecte une communication défaillante avec le pair GTPU voisin dans le résultat de détection, de manière à restreindre l'utilisation d'une liaison GTPU déconnectée correspondant au pair GTPU local par l'utilisateur.

11. Appareil pour rapporter des informations de pair GTPU local selon la revendication 10, comprenant en outre un module de création (41) configuré pour définir une association de test entre un pair GTPU local et un pair GTPU voisin pour permettre au pair GTPU local d'obtenir le résultat de détection, et établir une relation de session entre la passerelle de plan de contrôle et la passerelle de plan utilisateur,
dans lequel le résultat de détection transmis par la passerelle de plan d'utilisateur est reçu en fonction de la relation de session.

12. Appareil pour rapporter des informations de pair GTPU local selon la revendication 11, dans lequel le module de création (41) est configuré pour :
transmettre un message de demande d'établissement d'association à la passerelle de plan d'utilisateur,
recevoir un message de réponse d'établissement d'association renvoyé par la passerelle de plan d'utilisateur, le message de réponse d'établissement d'association transportant des informations d'un pair GTPU local de la passerelle de plan d'utilisateur,
transmettre un message de demande d'établissement de session à la passerelle de plan d'utilisateur en fonction du message de réponse d'établissement d'association, le message de demande d'établissement de session transportant des informations d'un pair GTPU voisin, et
recevoir un message de réponse d'établissement de session renvoyé par la passerelle de plan d'utilisateur pour établir la relation de session avec la passerelle de plan d'utilisateur, et définir l'association de test en fonction des informations du pair GTPU local et des informations du pair GTPU voisin pour permettre au pair GTPU local d'obtenir le résultat de détection.

13. Moyen de stockage sur lequel est stocké un programme informatique qui, lorsqu'il est exécuté par un processeur d'une passerelle de plan d'utilisateur, amène la passerelle de plan d'utilisateur à réaliser un procédé selon l'une des revendications 1 à 3.

14. Moyen de stockage sur lequel est stocké un programme informatique qui, lorsqu'il est exécuté par un processeur d'une passerelle de plan de contrôle, amène la passerelle de plan de contrôle à réaliser un procédé selon l'une quelconque des revendications 4 à 6.
